# EUROPEAN PATENT SPECIFICATION

(11) **EP 1 484 097 B1**
(45) Date of publication and mention of the grant of the patent: **11.10.2006**
(21) Application number: 04008513.6
(22) Date of filing: 08.04.2004
(51) Int. Cl.: B01D 35/143

(54) **Method of determination of the conditions of exhaustion of a filtering cartridge for filtering carafes with replaceable cartridge and carafe operating in compliance with such method**
Verfahren zur Bestimmung der Erschöpfunsbedingungen einer Filterpatrone für Auffangkannen mit auswechselbarer Patrone und Auffangkanne zum Betrieb unter Berücksichtigung dieser Methode
Méthode pour la détermination des conditions d'épuisement d'une cartouche de filtration de carafe filtrante avec cartouche remplaçable et carafe filtrante fonctionnant selon cette méthode.

(30) Priority: 04.06.2003 IT PD20030121
(43) Date of publication of application: 08.12.2004
(73) Proprietor: Laica S.p.A., 36020 Barbarano Vicentino (VI) (IT)
(72) Inventor: Moretto, Maurizio, 36100 Vicenza (IT)
(74) Representative: Cantaluppi, Stefano

(56) References cited:
- WO-A-01/94893
- US-A- 5 131 277
- US-A- 5 458 766
- US-A- 5 900 138
- US-A- 6 074 550
- US-B1- 6 224 751

## Description

The object of the present invention is a method to determine the conditions of exhaustion of a filtering cartridge for filtering carafes with replaceable cartridge and a carafe operating in compliance with such method.

Filtering carafes including a system of determination of the conditions of exhaustion of a filtering cartridge are familiar, for example by US 5,900,138 of the same applicant.

In filtering carafes the problem of pointing out to the user the need to replace the cartridge once it is exhausted is very common. Typically, exhaustion of the cartridge is monitored through the use of two parameters, the number of filtering cycles carried out from initial activation and/or the amount of time from said activation. It is clear that the filtering material contained in the cartridge progressively looses its capacity of purifying water through use and time.

Even if these two factors represent efficient parameters in order to evaluate the conditions of efficiency of the filtering cartridge, the indication based on these factors only may turn out to be unsatisfactory. There is in fact a third important factor for calculation of the lifespan of the cartridge: the quality of the water to be filtered and the concentration of pollutants that it contains.

The filtering power of the cartridge does not vary according to the quantity of water treated but also according to its quality.

The filtering carafes available up until today include a counting system of the filtering cycles carried out from initial activation of the cartridge, identified for example according to the counting of the number of accesses to the first water collection basin to be filtered. In some cases there is also an auxiliary counting system which counts the amount of time from the initial activation of the cartridge, compared with a time limit of lifespan of the cartridge, in order to calculate the exhaustion of the cartridge according to the first of the two events (exhaustion of time from the first activation - counting of the filtered water) that is verified.

Carafes capable of calculating the exhaustion of the cartridge according to the quality of the water treated are not currently known.

A main objective of the invention is to provide a method of determination of the conditions of exhaustion of a filter cartridge for filtering carafes with replaceable cartridge in which the condition of exhaustion is established in an accurate and reliable manner.

Another objective of the invention is to provide a filtering carafe with replaceable cartridge operating in compliance with such method and at the same time built in a simple and functional way.

Another objective of the findings is to provide a carafe that, in one single device, incorporates all of the indicators desired for an accurate determination of the conditions of exhaustion of the cartridge.

These objectives and more, which will be described in further detail here below, are achieved from a carafe made in compliance with the following claims.

The characteristics and the advantages of the invention are described in the detailed description of some illustrative examples of activation, provided purely as an indicative and not restricted example, in the drawings attached in which:
- drawing 1 is a schematic view in cross section of a filtering carafe according to the invention;
- drawing 2 is a schematic plan view from above of the carafe in drawing 1 in a partial section;
- drawing 3 is a schematic view in cross section of a second example of carafe according to the invention;
- drawing 4 is a schematic view in cross section in an enlarged scale of a detail of the carafe of drawing 3;
- drawings 5 and 6 are schematic views in cross section of two different embodiments of the invention.

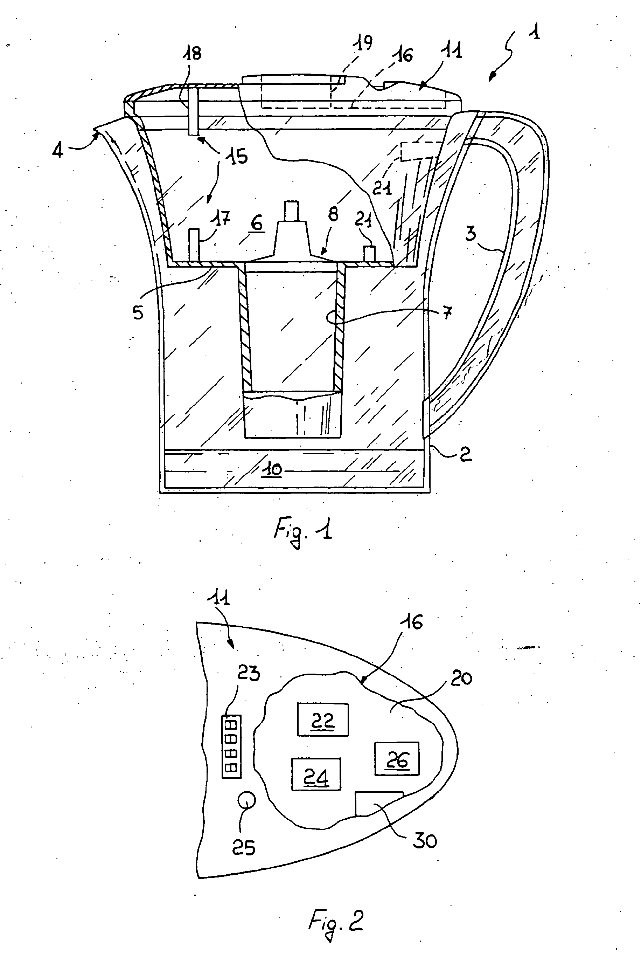

In the drawings, drawing 1 indicates on the whole a filtering carafe including a container 2 with a handle 3 and an opposite pouring spout 4. Container 2 holds a removable feedbox 5 in which the first basin 6 is defined, destined for collection of water to be filtered, the bottom of which has an open discharge conduit 7 destined to hold a filtering cartridge 8 of a replaceable kind. Container 2 also holds a second basin 10 for collection of the filtered water.

Container 2 is closed by a removable cover 11 which may be fitted with an open top 12 (drawings 3 and 4) in order to fill the first basin 6.

The water treatment process is carried out by introducing the water to be filtered into the first basin, prior to removal of the cover 11 that is to say prior to opening of the door 12 so that the water flows through the conduit 7 through the filter bed that is located in the cartridge 8 and passes onto the second basin.

In order to establish the lifespan of the cartridge 8, after this time the cartridge should be considered exhausted and therefore should be replaced with a new cartridge, the first basin includes an impedance measurer of the water to be filtered operatively connected to calculation means of the conditions of exhaustion of the cartridge. The impedance measurer is generally indicated by 15 and the calculations means are generally indicated by 16.

The impedance measurer includes at least two electrodes 17, 18 which are fitted in the first basin 6 and between which an electric circuit can be closed in the presence of water to be filtered. It is preferable that measuring is carried out in direct current, generated by a small accumulator 19, and therefore the impedance measured is equal to the electrical resistance of the water to be filtered. As well as measuring the conductivity of the water to be filtered, the value of which is correlated to the concentration of ions and as such affects the lifespan of the filtering cartridge 8, the electrodes 17, 18 are also used as counting means to identify the number of times the first collection basin is filled and the consequent amount of water already filtered. In order to do so it is preferable that measures are made to prevent that simple shaking of the carafe 1 may lead to the creation of a counting signal following temporary immersion of the two electrodes and subsequent closing of the electrical circuit between them.

An initial trick (drawing 1) lies in the position of the electrode 17 close to the bottom of the first basin 6 while the electrode 18 is placed close to the cover 11. Furthermore, in addition to the two measuring electrodes 17, 18 two consent electrodes 21 are also provided, with the task of identifying contemporarily with the measuring electrodes the state of submersion in the water to be filtered and therefore to confirm that the submersion of the electrodes 17, 18 has not been accidentally provoked by movement of the carafe.

An alternative is provided (drawings 3 and 4) in which the two electrodes 17, 18 are fitted onto the cover and extended in a filling conduit 32 which flows into the basin 6 at the opening point 33. The electrodes 17, 18 are preferably contained, at least partially, in a chamber 34 the bottom of which contains passages 35 suitably created in terms of dimension in order to time the emptying of the chamber 34 compared with a minimum predefined period of time. This avoids that simple temporary accidental submersions of the electrodes due to movements of the carafe may generate false calculations.

The result is achieved by defining a minimum period of time of submersion of the electrodes which exceeds a time limit established so that the signal generated is received as effective by the counting means 16. As a pure example, considering that the dimension of the passages 35 is such that the water contained in the chamber 34 flows in a time x1 of 30 seconds and that the entire filling chamber and the collection basin 6 are filled in a minimum period of time x2 of 10 seconds, the minimum time for contact between water and the electrodes 17, 18 is defined in x1+x2 = 40 seconds. Therefore, a limit may be defined for means of calculation in such a way that only closing signals of the circuit that exceed or are equal to a period of 40 seconds are considered. Signals that last less than 40 seconds will be ignored.

The electrodes 17, 18, 21 derive from a circuit 20 powered by the accumulator 19 and includes counting means 22 to count the filling cycles of the said first basin and furthermore includes a display 23 susceptible to highlight important information of the filtering cycles carried out and/or the residual lifespan of the cartridge 8.

The circuit 20 includes timers 24 to measure the amount of time that has passed from initial use of the cartridge and to calculate the amount of time left until its exhaustion and signal means 25, such as a visual LED alarm and/or a buzzer or other kind of sound signal, to inform the user of exhaustion of the filtering cartridge.

The means 17, 18, 21 identify closing of the circuit 20 during each new filling of the first basin 6 and at the same time false indications of closing of the circuit 20 following accidental submersion of the electrodes 17, 18, 21 are avoided.

In alternative or in addition to the means indicated above, circuit 20 includes a timer 26 activated upon each closing of the circuit 20 in order to exclude counting if the duration of the afore-mentioned closing extends for an amount of time lower than the limit value predefined.

The timer 26 therefore acts as a signal excluder device susceptible to accepting identification only if it extends beyond the predefined time limit. The erection of a pair of watertight panels aimed at creating a labyrinth passage to prevent accidental closing of the circuit in the absence of effective filling of the first basin 6 is also provided for between the measuring electrodes 17, 18.

The signals measured by the electrodes 17, 18, 21, the counting means 22 and the timers 24, 26 are fed to an input of a microprocessor 30 that, on the basis of a resident programme, elaborates important data on the lifespan of the cartridge according to the amount of time passed since its first activation and the amount of water treated, identified in terms of closure considered important by the circuit between the electrodes, and by the ionic concentration of the pollutants, identified in terms of conductivity of the water being treated. The important data calculated in this way is visualised, preferably in terms of a "count-down", on the display 23 which indicates the number of cycles remaining until exhaustion of the cartridge 8.

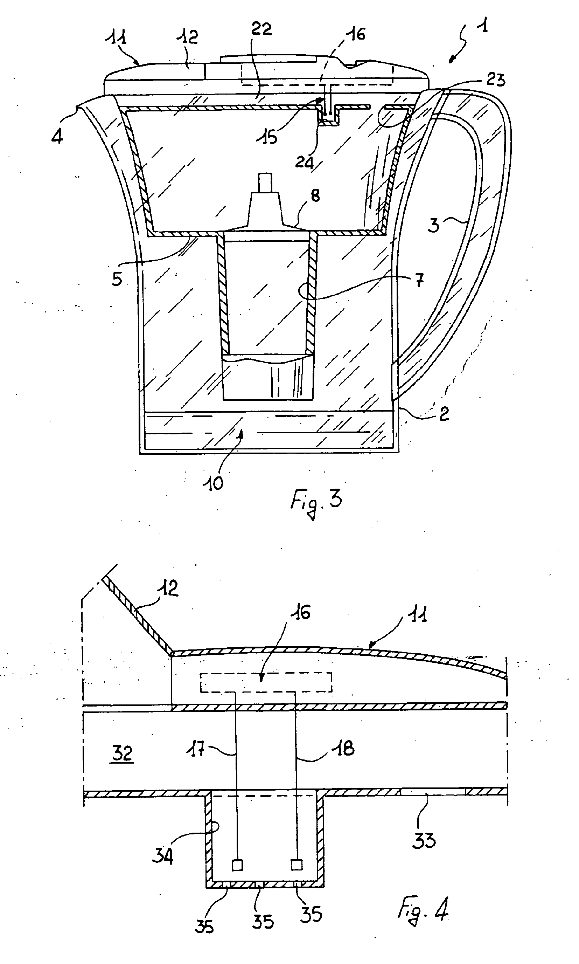

Drawing 5 illustrates another example of this present invention. Similar details are marked using the same numerical references as the previous Drawings.

The example of Drawing 5 is rather useful to take into consideration, in the calculation of exhaustion of the cartridge 8, of partial fillings of the first collection basin 6.

In this, there are numerous electrodes 51 located on growing levels in a compensation chamber 54 defined within the first basin 6 by a watertight panel 52. The watertight panel 52 carries, close to the bottom, a gauged opening 53 with the objective of minimizing level variations in the compensation chamber following oscillations of the carafe typically when it is inclined for pouring.

The electrodes of level 51 are associated with a reference electrode 50, also located at the bottom of the compensation chamber.

The electrodes 50, 51 are associated with corresponding branches of the measuring circuit of impedance so as to close the corresponding branch once the corresponding level of water in the basin is reached.

Even if the electrodes 51 with relative compensation chamber are represented in the upper basin 6 of the carafe in Drawing 5, such electrodes may also be placed in addition, or in alternative to the second basin 10 alternatively to the configuration described above. This second technical solution is illustrated in Drawing 5 by dotted lines. The specific numerical references are indicated with a superscript.

When the electrodes 50' and 51' are fitted exclusively to the collection basin of filtered water, reading of the impedance measurer provides an important value of the quality of filtered water, suggesting replacement of the cartridges when said quality falls below acceptable values.

When the electrodes 50', 51' or at least one of them (as well as the reference electrode 50 or 50') are fitted to both basins, reading of the impedance measurer provides an important value of the ratio between the quality of the water to be filtered and of the water filtered. Said value is therefore a direct index of the residual efficiency of the cartridge when measuring is carried out and highlights the capacity of the cartridge to carry out other filters or the need for replacement.

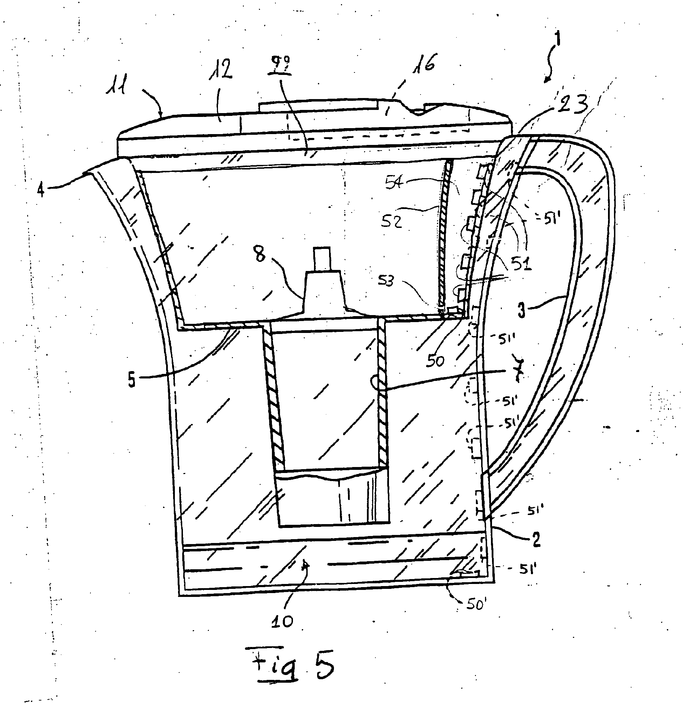

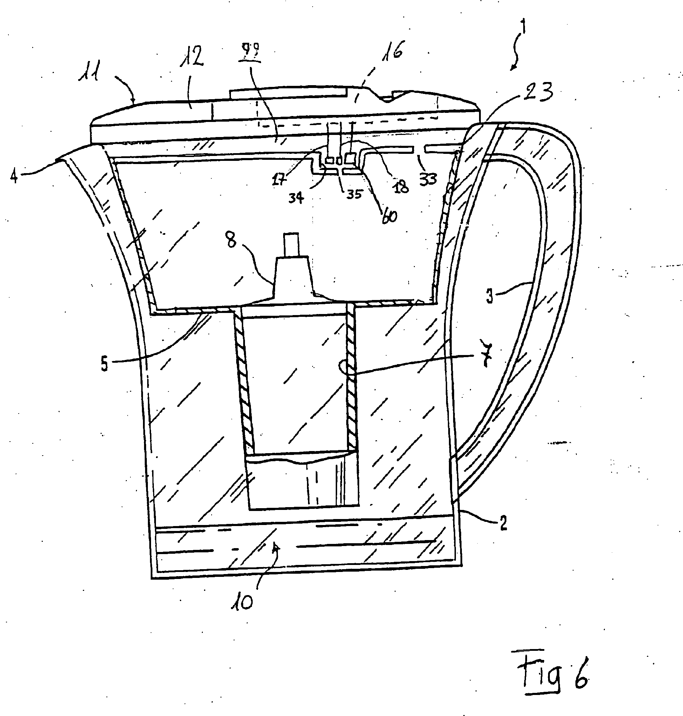

Another example is described with reference to drawing 6 where, in chamber 34, in addition to the electrodes 17, 18 a temperature sensor of the water to be filtered indicated with 60 is provided for.

Said sensor may alternatively be placed in the lower basin 10, as long as the temperature of the water to be filtered is not subject to appreciable variations.

The temperature measured is sent to the calculation means 16 and is used to correct the calculation of the conditions of exhaustion of the cartridge according to the temperature measured. In fact as the temperature increases a corresponding increase in electric conductivity measure due to a variation in the ionic concentration entirely in the solution is expected.

The invention described in this way contain numerous advantages compared with the technical notes indicated. They include:
- greater simplicity in terms of construction as in its entirety it does not include moving parts;
- greater control of the lifespan of the filtering cartridge which may be used completely but is always capable of guaranteeing an efficient level of filtering of the water treated;
- lower costs of the carafe as the solution adopted, with the same level of control of the efficiency of filtering, can be made with a huge economic advantage.

## Claims

1. Method of determination of the conditions of exhaustion of a filtering cartridge for filtering carafes (1) with a replaceable cartridge (8), in which an initial determination of impedance of water to be filtered to consequently calculate an important parameter for the determination of the efficient lifespan of the filtering cartridge (8) is provided for.

2. Method according to claim 1 in which said determination of impedance is carried out in the filtered water.

3. Method according to claim 1 or 2 in which at least a second determination is chosen between the identification of the amount of water treated and the identification of the amount of time since the first activation of the cartridge.

4. Method according to claim 1 or 3 in which at least one of said first and second identifications is carried out using electrodes (17, 18) susceptible to immersion in a first collection basin (6) of water to be filtered.

5. Method according to one or more of the previous claims in which the identification of impedance is carried out in direct current identifying a measurement of electric conductivity of the water to be treated.

6. Method according to one or more of the previous claims in which identification of the temperature of the filtered water to correct said important parameter according to temperature identification is provided for.

7. Method according to one or more of the previous claims in which said identification of impedance is carried out in the filtered water and in the water to be filtered, said important parameter for determination of the lifespan of the filtering cartridge being calculated according to both said impedance values.

8. A filtering carafe (1) with replaceable cartridge (8) including a first collection basin (6) of the water to be filtered, a flow conduit (7) from said first basin (6) and a filtering cartridge (8) placed on said flow conduit (7) to depurate the water moving from the first said basin (6) towards a second basin (10) for the collection of filtered water, **characterised by** the fact that it includes, in said first basin (6), a measuring circuit of impedance of the water to be filtered operatively connected to means of calculation of the conditions of exhaustion of the cartridge.

9. A filtering carafe (1) according to claim 8 in which said measurer of impedance includes at least two electrodes (17, 18) in said first basin (6) between which an electrical circuit (20) is closed in the presence of water of said first collection basin (6).

10. A filtering carafe (1) according to claim 8 or 9 in which said circuit (20) includes counting means (22) to count the filling cycles of said first basin (6).

11. A filtering carafe (1) according to claim 8, 9 or 10 in which said electrodes (17, 18) are applied to said cover (11).

12. A filtering carafe (1) according to claim 11 in which said electrodes (17, 18) are applied to a filling conduit (32) of the first collection basin (6).

13. A filtering carafe (1) according to claim 12 in which said electrodes (17, 18) are applied in correspondence with a chamber (34) of said conduit susceptible to emptying in a minimum predefined period of time.

14. A filtering carafe (1) according to claim 13 in which said chamber (34) includes gauged passages (35).

15. A filtering carafe (1) according to one or more of the claims from 8 to 14, in which said circuit (20) includes timers (24) to measure the amount of time from the first use of the cartridge (8) and to calculate the amount of time left until its exhaustion.

16. A filtering carafe (1) according to claim 15 in which said timers (24) are subjected to said electrodes (17, 18).

17. A filtering carafe (1) according to one or more of the claims from 8 to 16 in which said circuit (20) includes signal means (23) to Indicate exhaustion of the filtering cartridge (8).

18. A filtering carafe (1) according to one or more of the claims from 8 to 17 which includes identification means (17, 18, 21) to identify closing of the circuit every time the first basin (6) is filled and at the same time to exclude identification of the closing the circuit (20) in the case of accidental submersion of said electrodes (17, 18).

19. A filtering carafe (1) according to claim 18 in which said identification means (17, 18, 19) include a signal excluder device (26) susceptible to accepting identification only if the predefined time limit is exceeded.

20. A filtering carafe (1) according to one or more of the claims from 8 to 19 in which said identification means include approval electrodes (21) located in said basin.

21. A filtering carafe (1) according to one or more of the claims from 8 to 20 in which said electrical circuit (20) contains a direct current circuit predisposed to identify electrical conductivity of the water to be treated.

22. A filtering carafe (1) according to one or more of the claims from 8 to 21 in which said impedance measuring circuit is associated to one and/or the other of said basins.

23. A filtering carafe (1) according to one or more of the claims from 9 to 22 including a plurality of electrodes (51, 50, 51', 50') located in one and/or the other basins (6, 10) on progressively increasing levels corresponding branches of the impedance measuring circuit being associated to said electrodes so as to close the circuit in the corresponding branch once the corresponding level of water in the respective basin (6, 10) has been reached.

24. A filtering carafe (1) according to claim 23 in which said branches of the measuring circuit are associated with the calculation means to add together the amount of water treated in an efficient lifespan of the cartridge (8) and to consequently establish the conditions of exhaustion.

## Patentansprüche

1. Verfahren zur Bestimmung des Erschöpfungszustands einer Filterpatrone für Filterauffangkannen (1) mit einer auswechselbaren Patrone (8), in der eine Anfangsbestimmung der Impedanz von zu filterndem Wasser vorgesehen ist, um anschließend einen Einflussparameter zur Bestimmung der effizienten Lebensdauer der Filterpatrone (8) zu berechnen.

2. Verfahren nach Anspruch 1, in dem die Impedanzbestimmung im gefilterten Wasser durchgeführt wird.

3. Verfahren nach Anspruch 1 oder 2, in dem mindestens eine zweite Bestimmung zwischen der Ermittlung der behandelten Wassermenge und der Ermittlung der Zeitdauer seit der ersten Aktivierung der Patrone gewählt wird.

4. Verfahren nach Anspruch 1 oder 3, in dem mindestens eine der ersten und zweiten Ermittlungen unter Verwendung von Elektroden (17, 18) durchgeführt wird, die Eintauchen in einen ersten Sammelbehälter (6) von zu filterndem Wasser ermöglichen.

5. Verfahren nach einem oder mehreren der vorhergehenden Ansprüche, in dem die Ermittlung der Impedanz in Gleichstrom durchgeführt wird, wobei eine elektrische Leitfähigkeitsmessung des zu behandelnden Wassers ermittelt wird.

6. Verfahren nach einem oder mehreren der vorhergehenden Ansprüche, in dem Ermittlung der Temperatur von gefiltertem Wasser vorgesehen ist, um den Einflussparameter gemäß der Temperaturermittlung zu korrigieren.

7. Verfahren nach einem oder mehreren der vorhergehenden Ansprüche, in dem die Ermittlung der Impedanz im gefilterten Wasser und in zu filterndem Wasser durchgeführt wird, wobei der Einflussparameter zur Bestimmung der Lebensdauer der Filterpatrone gemäß den beiden Impedanzwerten berechnet wird.

8. Filterauffangkanne (1) mit auswechselbarer Patrone (8), die einen ersten Sammelbehälter (6) für zu filterndes Wasser aufweist, eine Strömungsleitung (7) von dem ersten Behälter (6) und eine Filterpatrone (8), die auf der Strömungsleitung (7) platziert ist, um das vom ersten Behälter (6) zu einem zweiten Behälter (10) zum Sammeln von gefiltertem Wasser bewegte Wasser zu reinigen, **dadurch gekennzeichnet, dass** sie im ersten Behälter (6) eine Messschaltung für die Impedanz des zu filternden Wassers aufweist, die operativ mit Mitteln zum Berechnen der Erschöpfungszustände der Patrone verbunden ist.

9. Filterauffangkanne (1) nach Anspruch 8, in der die Impedanzmesseinrichtung mindestens zwei Elektroden (17, 18) im ersten Behälter (6) aufweist, zwischen denen bei Inhalt von Wasser im ersten Sammelbehälter (6) ein elektrischer Kreis (20) geschlossen wird.

10. Filterauffangkanne (1) nach Anspruch 8 oder 9, in der der Kreis (20) Zählmittel (22) zum Zählen der Füllzyklen des ersten Behälters (6) aufweist.

11. Filterauffangkanne (1) nach Anspruch 8, 9 oder 10, in der die Elektroden (17, 18) an einer Abdeckung (11) angebracht sind.

12. Filterauffangkanne (1) nach Anspruch 11, in der die Elektroden (17, 18) an einer Einfüllleitung (32) des ersten Sammelbehälters (6) angebracht sind.

13. Filterauffangkanne (1) nach Anspruch 12, in der die Elektroden (17, 18) entsprechend einer Kammer (34) der Leitung angebracht sind, die in einem minimalen vorbestimmten Zeitraum geleert werden kann.

14. Filterauffangkanne (1) nach Anspruch 13, in der die Kammer (34) kalibrierte Durchgänge (35) aufweist.

15. Filterauffangkanne (1) nach einem oder mehreren der Ansprüche 8 bis 14, in der der Kreis (20) Zeitmesser (24) zum Messen der Zeitdauer von der ersten Benutzung der Patrone (8) und zum Berechnen der Zeitdauer, die bis zu ihrer Erschöpfung verbleibt, aufweist.

16. Filterauffangkanne (1) nach Anspruch 15, in der die Zeitmesser (24) den Elektroden (17, 18) unterliegen.

17. Filterauffangkanne (1) nach einem oder mehreren der Ansprüche 8 bis 16, in der der Kreis (20) Signalmittel (23) zum Anzeigen der Erschöpfung der Filterpatrone (8) aufweist.

18. Filterauffangkanne (1) nach einem oder mehreren der Ansprüche 8 bis 17, die Identifizierungsmittel (17, 18, 21) zum Ermitteln des Schließens des Kreises aufweist, jedes Mal, wenn der erste Behälter (6) gefüllt wird, und gleichzeitig zum Ausschluss einer Ermittlung des Schließens des Kreises (20) im Falle eines unbeabsichtigten Eintauchens der Elektroden (17, 18).

19. Filterauffangkanne (1) nach Anspruch 18, in der die Identifizierungsmittel (17, 18, 19) eine Signalausschlussvorrichtung (26) aufweisen, die Ermittlung nur akzeptieren kann, wenn die vorbestimmte Zeitgrenze überschritten ist.

20. Filterauffangkanne (1) nach einem oder mehreren der Ansprüche 8 bis 19, in der die Identifizierungsmittel Prüfelektroden (21) aufweisen, die im Behälter gelegen sind.

21. Filterauffangkanne (1) nach einem oder mehreren der Ansprüche 8 bis 20, in der der elektrische Kreis (20) eine Gleichstromschaltung enthält, die so prädisponiert ist, dass sie elektrische Leitfähigkeit des zu behandelnden Wassers ermittelt.

22. Filterauffangkanne (1) nach einem oder mehreren der Ansprüche 8 bis 21, in der die Impedanzmessschaltung einem und/oder dem anderen der Behälter zugeordnet ist.

23. Filterauffangkanne (1) nach einem oder mehreren der Ansprüche 9 bis 22, mit einer Mehrzahl von Elektroden (51, 50, 51', 50'), die in einem und/oder dem anderen der Behälter (6, 10) in progressiv zunehmenden Stufen gelegen sind, die Abzweigungen der Impedanzmessschaltung entsprechen, die den Elektroden zu geordnet sind, um den Kreis in der entsprechenden Abzweigung zu schließen, sobald der entsprechende Wasserspiegel im jeweiligen Behälter (6, 10) erreicht ist.

24. Filterauffangkanne (1) nach Anspruch 23, in der die Abzweigungen der Messschaltung den Berechnungsmitteln zugeordnet sind, um die behandelte Wassermenge in einer effizienten Lebensdauer der Patrone (8) zu addieren und folglich den Erschöpfungszustand zu erhalten.

## Revendications

1. Procédé de détermination des conditions d'épuisement d'une cartouche de filtration pour des carafes filtrantes (1) avec une cartouche remplaçable (8), dans lequel est prévue une détermination initiale d'impédance d'eau à filtrer pour calculer ensuite un paramètre important pour la détermination de la durée de vie efficace de la cartouche de filtration (8).

2. Procédé selon la revendication 1, dans lequel ladite détermination d'impédance est effectuée dans l'eau filtrée.

3. Procédé selon la revendication 1 ou 2, dans lequel au moins une seconde détermination est choisie entre l'identification de la quantité d'eau traitée et l'identification de la quantité de temps depuis la première utilisation de la cartouche.

4. Procédé selon la revendication 1 ou 3, dans lequel au moins l'une desdites première et seconde identifications est effectuée en utilisant des électrodes (17, 18) pouvant être immergées dans un premier réservoir (6) d'eau à filtrer.

5. Procédé selon l'une ou plusieurs des revendications précédentes, dans lequel l'identification d'impédance est effectuée en courant continu identifiant une mesure de conductivité électrique de l'eau à traiter.

6. Procédé selon l'une ou plusieurs des revendications précédentes, dans lequel est prévue une identification de la température de l'eau filtrée pour corriger ledit paramètre important conformément à une identification de température.

7. Procédé selon l'une ou plusieurs des revendications précédentes, dans lequel ladite identification d'impédance est effectuée dans l'eau filtrée et dans l'eau à filtrer, ledit paramètre important pour la détermination de la durée de vie de la cartouche filtrante étant calculé conformément auxdites deux valeurs d'impédance.

8. Carafe filtrante (1) avec cartouche remplaçable (8) comprenant un premier réservoir (6) d'eau à filtrer, un conduit d'écoulement (7) provenant dudit premier réservoir (6) et une cartouche filtrante (8) placée sur ledit conduit d'écoulement (7) pour dépurer l'eau se déplaçant du premier réservoir (6) vers un second réservoir (10) pour le stockage de l'eau filtrée, **caractérisée par le fait qu'**elle comprend, dans ledit premier réservoir (6), un circuit de mesure d'impédance de l'eau à filtrer relié en fonctionnement à des moyens de calcul des conditions d'épuisement de la cartouche.

9. Carafe filtrante (1) selon la revendication 8, dans laquelle ledit mesureur d'impédance comprend au moins deux électrodes (17, 18) dans ledit premier réservoir (6) entre lesquelles un circuit électrique (20) est fermé en présence d'eau dans ledit premier réservoir (6).

10. Carafe filtrante (1) selon la revendication 8 ou 9, dans laquelle ledit circuit (20) comprend des moyens de comptage (22) pour compter les cycles de remplissage dudit premier réservoir (6).

11. Carafe filtrante (1) selon la revendication 8, 9 ou 10, dans laquelle lesdites électrodes (17, 18) sont appliquées audit couvercle (11).

12. Carafe filtrante (1) selon la revendication 11, dans laquelle lesdites électrodes (17, 18) sont appliquées à un conduit de remplissage (32) du premier réservoir (6).

13. Carafe filtrante (1) selon la revendication 12, dans laquelle lesdites électrodes (17, 18) sont appliquées en correspondance avec une chambre (34) dudit conduit pouvant se vider en une période de temps prédéfinie minimum.

14. Carafe filtrante (1) selon la revendication 13, dans laquelle ladite chambre (34) comprend des passages calibrés (35).

15. Carafe filtrante (1) selon l'une ou plusieurs des revendications 8 à 14, dans laquelle ledit circuit (20) comprend des horloges (24) pour mesurer la quantité de temps à partir de la première utilisation de la cartouche (8) et pour calculer la quantité de temps restant jusqu'à son épuisement.

16. Carafe filtrante (1) selon la revendication 15, dans laquelle lesdites horloges (24) sont soumises auxdites électrodes (17, 18).

17. Carafe filtrante (1) selon l'une ou plusieurs des revendications 8 à 16, dans laquelle ledit circuit (20) comprend des moyens de signal (23) pour indiquer l'épuisement de la cartouche de filtration (8).

18. Carafe filtrante (1) selon l'une ou plusieurs des revendications 8 à 17, comprenant des moyens d'identification (17, 18, 21) pour identifier la fermeture du circuit chaque fois que le premier réservoir (6) est rempli et simultanément pour exclure l'identification de la fermeture du circuit (20) dans le cas d'une submersion lesdites électrodes (17, 18).

19. Carafe filtrante (1) selon la revendication 18, dans laquelle lesdits moyens d'identification (17, 18, 19) comprennent un dispositif d'exclusion de signal (26) pouvant accepter l'identification seulement si la limite de temps prédéfinie est dépassée.

20. Carafe filtrante (1) selon l'une ou plusieurs des revendications 8 à 19, dans laquelle lesdits moyens d'identification comprennent des électrodes d'homologation (21) situées dans ledit réservoir.

21. Cartouche filtrante (1) selon l'une ou plusieurs des revendications 8 à 20, dans laquelle ledit circuit électrique (20) comporte un circuit à courant continu pouvant identifier la conductivité électrique de l'eau à traiter.

22. Carafe filtrante (1) selon l'une ou plusieurs des revendications 8 à 21, dans laquelle ledit circuit de mesure d'impédance est associé à l'un et/ou l'autre desdits réservoirs.

23. Carafe filtrante (1) selon l'une ou plusieurs des revendications 9 à 22, comprenant une pluralité d'électrodes (51, 50, 51', 50') situées dans l'un et/ou l'autre réservoir (6, 10) à des niveaux augmentant progressivement correspondant à des subdivisions du circuit de mesure d'impédance associé auxdites électrodes de manière à fermer le circuit dans la subdivision correspondante une fois que le niveau correspondant d'eau dans le réservoir respectif (6, 10) a été atteint.

24. Carafe filtrante (1) selon la revendication 23, dans laquelle lesdites subdivisions du circuit de mesure sont associées aux moyens de calcul pour ajouter la quantité d'eau traitée pendant une durée de vie efficace de la cartouche (8) et pour établir ensuite les conditions d'épuisement.
